# EUROPEAN PATENT APPLICATION

(11) **EP 3 305 925 A1**
(43) Date of publication of application: **11.04.2018**
(21) Application number: 16803107.8
(22) Date of filing: 23.05.2016
(51) Int. Cl.: C22C 21/00, B23K 1/00, B23K 1/19, B23K 31/02, B23K 101/14, B23K 103/10

(54) **ALUMINUM ALLOY CLAD MATERIAL AND BRAZING METHOD**

(30) Priority: 04.06.2015 JP 2015113635
(71) Applicant: UACJ Corporation, Tokyo 100-0004 (JP)
(72) Inventor: ITOH Yasunaga, Tokyo 100-0004 (JP); SAKODA Shoichi, Tokyo 100-0004 (JP); YAMAYOSHI Tomoki, Tokyo 100-0004 (JP); YANAGAWA Yutaka, Tokyo 100-0004 (JP)
(74) Representative: Müller-Boré & Partner Patentanwälte PartG mbB
(86) International application number: PCT/JP2016/065142
(87) International publication number: WO 2016/194672

(57) **Abstract**

An aluminum alloy clad material includes a core material that is made of an aluminum alloy containing Mg at a concentration of 0.2 to 2.0% (mass %; the same applies below), with the balance being Al and unavoidable impurities, and has one side or two sides cladded with a surface-layer material made of pure aluminum containing Mg having a limited concentration of lower than 0.1%. In addition, an aluminum alloy clad material includes a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0%, with the balance being Al and unavoidable impurities.

According to the present invention, it is possible to provide an aluminum alloy clad material (counterpart material with no brazing filler material) allowing a robust fillet to be formed with molten filler quickly in flux-less brazing in which brazing is carried out in an inert gas atmosphere without the use of any flux.

## Description

### TECHNICAL FIELD

The present invention relates to an aluminum alloy clad material to be brazed in an inert gas atmosphere without application of a flux, and more particularly, to an aluminum alloy clad material (a counterpart material with no brazing filler material) that is to be brazed with molten filler, and relates to a brazing method.

### BACKGROUND ART

Brazing is widely used as a joining method for aluminum heat exchangers, especially heat exchanges for automobiles, with a large number of small joined portions. To braze aluminum, it is necessary to destroy the oxidized film covering the surface of the brazing filler material, and to bring the molten brazing filler material into contact with the base material or to another molten brazing filler material. Methods for brazing after destroying the oxidized film are generally classified into two types one of which is flux brazing that is brazing with a use of a flux, and the other is flux-less brazing that is brazing carried out in a vacuum or in an inert gas atmosphere, without the application of a flux.

The present invention is applicable to the flux-less brazing that is brazing without the use of a flux. The flux-less brazing will now be explained. In vacuum brazing where brazing is carried out in a vacuum, the oxidized film on the surface of a brazing filler material is mechanically destroyed by the evaporation of Mg from the brazing filler material (Mg boiling furiously as the brazing filler material melts). Mg contained in the brazing filler material or Mg dispersed from the core material onto the surface of the brazing filler material causes reduction in the oxidized film, and causes the film on the surface of the brazing filler material to weaken. When the brazing filler material is then to be joined to a counterpart material having no brazing filler material, Mg evaporated from the brazing filler material or from a getter (a joining promoter made of pure Mg, or of an alloy containing Mg) installed near an unheated product reacts with the oxidized film of the counterpart material, reduces oxygen in the oxidized film, and destroys the oxidized film. Therefore, a robust fillet can be formed quickly even on a counterpart material having no brazing filler material.

By contrast, when the flux-less brazing is carried out in an inert gas atmosphere, substantially no Mg evaporates from the material. The oxidized film is therefore destroyed by allowing oxidizing elements (such as Mg, Be, Li, Ca, and Ba which have low free energy for generating oxides) in the brazing filler material or the core material to weaken the oxidized film on the surface of the brazing filler material. However, when the counterpart material is a material with no brazing filler material, it takes a quite long time for a fillet to form, for following reasons.

To begin with, in a joined portion to which a counterpart material having no brazing filler material is to be brazed, molten filler starts extruding via a clearance formed on the oxidized film (a cleavage resultant of thermal expansion difference or reduction induced by an oxidizing element) at the contact point, and the molten filler is brought into contact with the oxidized film of the counterpart material. Oxidizing elements in the molten filler then reduce the oxygen in the oxidized film of the counterpart material, and destroy the oxidized film. The molten filler is then brought into contact with the base material of the counterpart material. Formation of a fillet proceeds gradually, as the oxidizing elements in the molten filler reduce the oxygen in the oxidized film of the counterpart material, and destroy the oxidized film gradually. Because the destruction of the oxidized film of the counterpart material proceeds only as the oxidizing elements in the molten filler react, it takes a long time in a fillet formation. Furthermore, another factor that extends the time required for the formation of a fillet is the destruction or the weakening of the oxidized film which hardly proceeds before the brazing filler material melts.

In relation to the formation of a fillet with a counterpart material with no brazing filler material, there are other issues that, in addition to the time required in the fillet formation, sometimes an even fillet is not formed, or no fillet is formed at all, even when the brazing filler material is brought into contact with the counterpart material. A direct cause of such defective fillet formation is often in an undestroyed oxidized film on the counterpart material that prevents the molten filler from being brought into contact with the base material of the counterpart material. Defective formation of a fillet is an issue that arises when the oxidized film of the counterpart material has a structure that is not easily destroyable, or when the oxidized film of the counterpart material grows due to a high oxygen concentration in the atmosphere during the heating. In this manner, there is always some instability in using flux-less brazing to join a counterpart material having no brazing filler material in an inert gas atmosphere, although the level of instability may differ. Therefore, a special attention is required, by etching the material before the brazing so that the oxidized film is replaced with a natural oxidized film, or by strictly managing the brazing atmosphere in which the brazing is carried out, for example.

In order to improve the joinability with the counterpart material with no brazing filler material, there have been some attempts for promoting the destruction of the oxidized film on the counterpart material by containing some oxidizing element in the counterpart material. However, this approach has some trade-off, because the oxidizing element contained in the counterpart material reinforces the oxidized film on the material surface of the counterpart material, and promotes the growth of the oxidized film during the brazing heating. The inventors of the present invention found out that, in the comparison of the use of a 6063 alloy containing Mg at a concentration of 0.6% as a counterpart material with that of 1070 alloy having no Mg content, the joinability of the 6063 alloy varied greatly depending on the heating conditions, and, particularly, in a brazing atmosphere with a high oxygen concentration, the 1070 alloy resulted in a better fillet. The inventors concluded that the reasons behind the low fillet quality with the 6063 alloy was that a strong MgO layer was formed on the surface of the 6063 alloy material, and that reoxydation took place during the brazing heating in the brazing atmosphere with a high oxygen concentration. It has also been confirmed that the joinability of the material containing Mg deteriorates prominently in a brazing atmosphere with a higher oxygen concentration or a higher dewpoint. It has been thus confirmed that, in a general production brazing furnace with no management of the oxygen concentration in the brazing atmosphere, an Mg-added material does not serve an effective and reliable solution.

### RELATED-ART DOCUMENT

### PATENT DOCUMENT

Patent Document 1: Japanese Patent Publication 2014-104509-A
Patent Document 2: Japanese Patent Publication 2004-358519-A
Patent Document 3: Japanese Patent Publication 2013-001941-A
Patent Document 4: Japanese Patent Publication 2014-050861-A

### SUMMARY OF THE INVENTION

### TECHNICAL PROBLEM

In consideration of the conventional issues described above, the inventors made following observations, in relation to a technique for forming a quality fillet on a counterpart material with no brazing filler material, using flux-less brazing in which the brazing is carried out in an inert gas atmosphere without the use of a flux.

The requirements for a quality fillet to be formed quickly in an inert gas atmosphere are as follows:
(1) No strong oxidized film should be formed on the surface of the material during the production of the material.
(2) Destruction or weakening of the oxidized film should proceed before the brazing filler material melts.
(3) Further destruction of the oxidized film should proceed quickly after the fillet formation begins.

Among these requirements, for the requirement (1) to be satisfied, it is necessary to control the amount of oxidizing elements in the material surface. Among the oxidizing elements, Mg is often used as an additive element in a general aluminum alloy, and it is important for the amount of Mg in the material surface to be controlled. The other elements such as Be, Li, Ca, and Ba are elements that are not generally used, except for special cases. If any of these elements are added for some reason, the added amount should be also controlled strictly.

For the requirement (2) related to the destruction or weakening of the oxidized film, although there is nothing to be done except for an oxidizing element to react, this objective can be achieved by adding the oxidizing element to a region of the material at some depth from the surface, instead of adding the oxidizing element evenly throughout the material, and allowing the oxidizing element to disperse and to reach the surface of the material during the brazing heating, despite this condition appears to contradict with the requirement (1). For this reason, it is preferable for the material not to be single-layered, but to be a clad material having a thin surface-layer material. In other words, a clad material can have a surface-layer material satisfying the requirement (1), and the requirement (2) can be satisfied by adding Mg to an internal material layer (a core material or an interlayer material). The thickness of the surface-layer material also plays an important factor in fully satisfying the requirement (2). Although an appropriate thickness of the surface-layer material depends on the Mg content of the core material or the interlayer material, or on the temperature history during the brazing heating, a cladding ratio with a thickness of a few percent or lower is required in a general brazing filler material, within a range of general brazing temperature history.

As to the requirement (3), if the requirement (2) is satisfied, the destruction of the oxidized film proceeds more quickly after the formation of the fillet begins, compared with that before the fillet formation begins. This is because, once the formation of the fillet begins, that is, as the molten filler is brought into contact with the base material of the counterpart material, the molten filler melts the base material of the counterpart material, and allows the fillet to grow. When the base material dissolves into the molten filler at a higher speed, the destruction of the oxidized film on the counterpart material is promoted more. Therefore, the element bringing down the melting point of the surface-layer material works effectively. Hence, the addition of Mg to the internal material layer is effective for satisfying the requirement (3), because Mg increases the speed at which the base material dissolves into the molten filler, and promotes the destruction of the oxidized film.

The present invention is made as a result of tests and study conducted based on the observations described above, and an object of the present invention is to provide a material composition of an aluminum alloy clad material (a counterpart material with no brazing filler material) capable of forming a robust fillet quickly with molten filler, in flux-less brazing in which brazing is carried out in an inert gas atmosphere without using any flux, and to provide a brazing method using the aluminum alloy clad material.

### SOLUTION TO PROBLEM

An aluminum alloy clad material according to claim 1 for achieving the objective described above is an aluminum alloy clad material to be brazed in an inert gas atmosphere without application of a flux including a core material that is made of an aluminum alloy containing Mg at a concentration of 0.2 to 2.0% with the balance being A1 and unavoidable impurities, and has one side or two sides cladded with a surface-layer material made of pure aluminum containing Mg having a limited concentration of lower than 0.1%. In the explanation hereunder, the alloy compositions are indicated in mass %.

An aluminum alloy clad material according to claim 2 is an aluminum alloy clad material to be brazed in an inert gas atmosphere without application of a flux including a core material that is made of an aluminum alloy containing Mg at a concentration of 0.2 to 2.0% with the balance being Al and unavoidable impurities, and has one side or two sides cladded with a surface-layer material made of an aluminum alloy containing either or both of Zn at a concentration of 0.05 to 4% and Si at a concentration of 0.05 to 2%, and having Mg having a limited concentration of lower than 0.1%.

An aluminum alloy clad material according to claim 3 is an aluminum alloy clad material to be brazed in an inert gas atmosphere without application of a flux including a core material that is made of an aluminum alloy containing Mg at a concentration of 0.2 to 2.0% and Mn at a concentration of 0.05 to 1.8% with the balance being Al and unavoidable impurities, and has one side or two sides cladded with a surface-layer material made of pure aluminum containing Mg having a limited concentration of lower than 0.1%.

An aluminum alloy clad material according to claim 4 is an aluminum alloy clad material to be brazed in an inert gas atmosphere without application of a flux including a core material that is made of an aluminum alloy containing Mg at a concentration of 0.2 to 2.0% and Mn at a concentration of 0.05 to 1.8%, with the balance being Al and unavoidable impurities, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%.

An aluminum alloy clad material according to claim 5 is characterized in that, in any one of claims 1 to 4, the core material contains either or both of Cu at a concentration of 0.05 to 2% and Si at a concentration of 0.05 to 1.0%.

An aluminum alloy clad material according to claim 6 is an aluminum alloy clad material to be brazed in an inert gas atmosphere without application of a flux including a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0%, with the balance being Al and unavoidable impurities.

An aluminum alloy clad material according to claim 7 is an aluminum alloy clad material to be brazed in an inert gas atmosphere without application of a flux including a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0%, with the balance being Al and unavoidable impurities.

An aluminum alloy clad material according to claim 8 is an aluminum alloy clad material to be brazed in an inert gas atmosphere without application of a flux including a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0% and also containing either or both of Li at a concentration of 0.01 to 0.2% and Be at a concentration of 0.01 to 0.3%, with the balance being Al and unavoidable impurities.

An aluminum alloy clad material according to claim 9 is an aluminum alloy clad material to be brazed in an inert gas atmosphere without application of a flux including a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0%, and also containing either or both of Li at a concentration of 0.01 to 0.2% and Be at a concentration of 0.01 to 0.3%, with the balance being Al and unavoidable impurities.

An aluminum alloy clad material according to claim 10 is an aluminum alloy clad material to be brazed in an inert gas atmosphere without application of a flux including a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0% and Cu at a concentration of 0.05 to 2%, with the balance being Al and unavoidable impurities.

An aluminum alloy clad material according to claim 11 is an aluminum alloy clad material to be brazed in an inert gas atmosphere without application of a flux including a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and Cu at a concentration of 0.05 to 2%, with the balance being Al and unavoidable impurities.

An aluminum alloy clad material according to claim 12 is an aluminum alloy clad material to be brazed in an inert gas atmosphere without application of a flux including a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0% and Cu at a concentration of 0.05 to 2% and also containing either or both of Li at a concentration of 0.01 to 0.2% and Be at a concentration of 0.01 to 0.3%, with the balance being A1 and unavoidable impurities.

An aluminum alloy clad material according to claim 13 is an aluminum alloy clad material to be brazed in an inert gas atmosphere without application of a flux including a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and Cu at a concentration of 0.05 to 2%, and also containing either or both of Li at a concentration of 0.01 to 0.2% and Be at a concentration of 0.01 to 0.3%, with the balance being A1 and unavoidable impurities.

An aluminum alloy clad material according to claim 14 is characterized in that, in any one of claims 6 to 13, the core material made of aluminum contains Mg at a concentration of 0.2 to 2.0%, with the balance being A1 and unavoidable impurities.

An aluminum alloy clad material according to claim 15 is characterized in that, in any one of claims 6 to 13, the core material made of an aluminum alloy contains Mg at a concentration of 0.2 to 2.0% and Mn at a concentration of 0.05 to 1.8%, with the balance being Al and unavoidable impurities.

An aluminum alloy clad material according to claim 16 is characterized in that, in claim 14 or 15, the core material made of an aluminum alloy also contains Cu at a concentration of 0.05 to 2%.

An aluminum alloy clad material according to claim 17 is characterized in that, in any one of claims 1 to 16, a thickness of the surface-layer material is 0.1 mm or less.

A brazing method according to claim 18 is a brazing method for brazing by assembling the aluminum alloy clad material according to any one of claims 1 to 17, the brazing method being characterized in that the aluminum alloy clad material is etched with an acid solution or an alkaline solution before the brazing.

### ADVANTAGEOUS EFFECTS OF THE INVENTION

According to the present invention, an aluminum alloy clad material (a counterpart material with no brazing filler material) enabling a robust filet to be formed with molten filler quickly in flux-less brazing in which brazing is carried out in an inert gas atmosphere without using any flux, and a brazing method using the aluminum alloy clad material are provided.

### BRIEF DESCRIPTION OF DRAWINGS

FIG.1 is a side view illustrating a clearance filling test piece used in brazability evaluating according to an embodiment of the present invention.
FIG.2 is a front view of the clearance filling test piece illustrated in FIG. 1.

### DESCRIPTION OF EMBODIMENTS

An aluminum alloy clad material according to the present invention is an aluminum alloy clad material to be brazed in an inert gas atmosphere without application of a flux. According to a first embodiment of the present invention, an aluminum alloy clad material has a core material made of aluminum or an aluminum alloy having one side or two sides cladded with a surface-layer material made of aluminum or an aluminum alloy.

In the first embodiment, a first aspect is characterized in that a core material made of an aluminum alloy containing Mg at a concentration of 0.2 to 2.0%, with the balance being A1 and unavoidable impurities, has one side or two sides cladded with a surface-layer material made of pure aluminum containing Mg having a limited concentration of lower than 0.1%. Mg in the core material serves to promote destruction or weakening of the oxidized film. If the Mg content is 0.2% or lower, however, the effect of destructing the oxidized film on the clad material surface during the brazing heating will be insufficient. If the Mg content exceeds 2.0%, erosion will occur due to the molten filler, so that fillet-formability or surface joinability is obstructed. Furthermore, if the Mg content of the surface-layer material is 0.1% or more, the oxidized film formed during the material production and the brazing heating will be stronger, so the brazability will deteriorate.

A second aspect is characterized in that a core material made of an aluminum alloy containing Mg at a concentration of 0.2 to 2.0%, with the balance being Al and unavoidable impurities, has one side or two sides cladded with a surface-layer material made of an aluminum alloy containing either or both of Zn at a concentration of 0.05 to 4% and Si at a concentration of 0.05 to 2%, and having Mg having a limited concentration of lower than 0.1%. Zn in the surface-layer material, too, serves to promote destruction or weakening of the oxidized film. A Zn content of 0.05% or lower in the surface-layer material is treated as an impurity, and does not affect to promote the destruction or weakening of the oxidized film after the formation of a fillet begins. With a Zn content exceeding 4%, an increased amount of Zn will dissolve into the molten filler, and corrosion resistance of the joined portion will be adversely affected. A Si content included in the surface-layer material at 0.05% or lower is treated as an impurity, and does not affect to promote the destruction or weakening of the oxidized film after the formation of a fillet begins. If the Si content of the surface-layer material exceeds 2%, the surface-layer material partially melts during the brazing heating. Therefore, it is not preferable from the viewpoint of joinability and corrosion resistance.

A third aspect is characterized in that a core material made of an aluminum alloy containing Mg at a concentration of 0.2 to 2.0% and Mn at a concentration of 0.05 to 1.8%, with the balance being Al and unavoidable impurities, has one side or two sides cladded with a surface-layer material made of pure aluminum containing Mg having a limited concentration of lower than 0.1%. Mn in the core material serves to improve the strength of the core material, and if the content is 0.05% or lower, the effect of improving the strength will be insufficient. If the content exceeds 1.8%, rolling workability deteriorates. A more preferable Mn content range is 1.0 to 1.7%.

A fourth aspect is characterized in that a core material made of an aluminum alloy containing Mg at a concentration of 0.2 to 2.0% and Mn at a concentration of 0.05 to 1.8%, with the balance being Al and unavoidable impurities, has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%.

In the first to the fourth aspects, the core material may also contain either or both of Cu at a concentration of 0.05 to 2% and Si at a concentration of 0.05 to 1.0%. Cu serves to improve the core material potential and the strength, to lower the melting point of the core material, and to promote dispersion of Mg. A Cu content of 0.05% or lower in the core material is treated as an impurity, and does not affect to promote the destruction or weakening of the oxidized film after the formation of a fillet begins. The Cu content exceeding 2% is not preferable because it causes erosion to occur during the brazing, so that the fillet-forming ability or the surface joinability is obstructed, and intergranular corrosion is more likely to occur. Combined addition of Si and Mg serves to improve the strength, to lower the melting point of the core material, and to promote dispersion of Mg. A Si content of the core material at 0.05% or lower is treated as an impurity, and does not affect to promote the destruction or weakening of the oxidized film after the formation of a fillet begins. When the Si content exceeds 1.0%, the core material may partially melt during the brazing heating.

In an aluminum alloy clad material used for brazing in an inert gas atmosphere without application of a flux according to a second embodiment of the present invention, a core material made of aluminum or an aluminum alloy has one side or two sides cladded with a surface-layer material via an interlayer material, and cladded in the order of the core material, the interlayer material, and the surface-layer material.

In the second embodiment, a first aspect is characterized in that a core material made of aluminum or an aluminum alloy has one side or two sides cladded with a surface-layer material made of pure aluminum containing Mg having a limited concentration of lower than 0.1%, via an interlayer material made of an aluminum alloy containing Mg at a concentration of 0.3 to 2.0%, with the balance being Al and unavoidable impurities. Mg in the interlayer material serves to promote destruction or weakening of the oxidized film, but if the Mg content of interlayer material is 0.3% or lower, the effect of destructing the oxidized film on the clad material surface will be insufficient during the brazing heating. If the Mg content exceeds 2.0%, erosion will occur due to the molten filler, so that fillet-forming ability or surface joinability is obstructed. If the Mg content of the surface-layer material is 0.1% or more, the oxidized film formed during the material production and the brazing heating will be stronger, so the brazability will deteriorate, in the same manner as the first embodiment.

A second aspect is characterized in that a core material made of aluminum or an aluminum alloy has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0%, with the balance being Al and unavoidable impurities. The significance of Zn and Si content and the reasons why Zn and Si content of the surface-layer material is controlled are the same as those according to the first embodiment.

A third aspect is characterized in that a core material made of aluminum or an aluminum alloy has one side or two sides cladded with a surface-layer material made of pure aluminum containing Mg having a limited concentration of lower than 0.1%, via an interlayer material made of an aluminum alloy containing Mg at a concentration of 0.3 to 2.0% and also containing either or both of Li at a concentration of 0.01 to 0.2% and Be at a concentration of 0.01 to 0.3%, with the balance being Al and unavoidable impurities. Li and Be, which are oxidation elements that are added to the interlayer material, serve to further promote destruction or weakening of the oxidized film by coexisting with Mg. If Li added to the interlayer material is 0.01% or lower, the effect of improving the joinability will be insufficient. If the Li exceeds 0.2%, reoxydation that takes place during the brazing heating gives an adversary effect to the joinability. If Be added to the interlayer material is 0.01% or lower, the effect of improving the joinability will be insufficient. If Be exceeds 0.3%, reoxydation that takes place during the brazing heating gives an adversary effect to the joinability.

A fourth aspect is characterized in that a core material made of aluminum or an aluminum alloy has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and also containing either or both of Li at a concentration of 0.01 to 0.2% and Be at a concentration of 0.01 to 0.3%, with the balance being Al and unavoidable impurities.

A fifth aspect is characterized in that a core material made of aluminum or an aluminum alloy has one side or two sides cladded with a surface-layer material made of pure aluminum containing Mg having a limited concentration of lower than 0.1%, via an interlayer material made of an aluminum alloy containing Mg at a concentration of 0.3 to 2.0% and Cu at a concentration of 0.05 to 2%, with the balance being Al and unavoidable impurities. Cu in the interlayer material serves to improve the potential and the strength of the core material, to lower the melting point of the core material, and to promote dispersion of Mg. A Cu content of the interlayer material at 0.05% or lower is treated as an impurity, and does not affect to promote the destruction or weakening of the oxidized film after the formation of a fillet begins. The Cu content exceeding 2% is not preferable because it causes erosion to occur during the brazing, so that the fillet-forming ability or the surface joinability is obstructed, and intergranular corrosion is more likely to occur.

A sixth aspect is characterized in that a core material made of aluminum or an aluminum alloy has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and Cu at a concentration of 0.05 to 2%, with the balance being Al and unavoidable impurities.

A seventh aspect is characterized in that a core material made of aluminum or an aluminum alloy has one side or two sides cladded with a surface-layer material made of pure aluminum containing Mg having a limited concentration of lower than 0.1%, via an interlayer material made of an aluminum alloy containing Mg at a concentration of 0.3 to 2.0% and Cu at a concentration of 0.05 to 2% and also containing either or both of Li at a concentration of 0.01 to 0.2% and Be at a concentration of 0.01 to 0.3%, with the balance being Al and unavoidable impurities.

An eighth aspect is characterized in that a core material made of aluminum or an aluminum alloy has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and Cu at a concentration of 0.05 to 2% and also containing either or both of Li at a concentration of 0.01 to 0.2% and Be at a concentration of 0.01 to 0.3%, with the balance being Al and unavoidable impurities.

In the first to the eighth aspects of the second embodiment, it is possible to use a core material made of aluminum alloy containing Mg at a concentration of 0.2 to 2.0%, with the balance being Al and unavoidable impurities, or a core material made of an aluminum alloy containing Mg at a concentration of 0.2 to 2.0% and Mn at a concentration of 0.05 to 1.8%, with the balance being Al and unavoidable impurities, as a core material. These aluminum alloy core materials may also contain Cu at a concentration of 0.05 to 2%.

In the aluminum alloy clad material according to the first to the second embodiments, even when any elements other than those mentioned above, e.g., 1.0% or lower of Fe, Ti of 0.3% or lower, Zr of 0.3% or lower, or Cr of 0.4% or lower, are contained in the core material, the interlayer material, or the surface-layer material, the effects of the present invention remain unaffected.

Bi is known as an element added to the brazing filler material to improve the brazability. When the surface-layer material of the aluminum alloy clad material according to the first and the second embodiment contains Bi, however, the content should be controlled to 0.01% or lower, preferably 0.005% or lower, from the viewpoint of suppressing the reoxydation during the brazing heating.

To promote destruction or weakening of the oxidized film, the thickness of the surface-layer material also plays an important factor. Although an appropriate thickness of the surface-layer material depends on the Mg content of the core material or the interlayer material, or on the temperature history during the brazing heating, the surface-layer material is required to have a cladding ratio with a thickness of a few percent or lower, assuming a general brazing material and a general range of brazing temperature history. In the present invention, it is preferable for the surface-layer material to have a thickness of 0.1 mm or less.

If the thickness of the surface-layer material exceeds 0.1 mm, the surface-layer material prevents Mg in the core material or the interlayer material from reaching the material surface easily before the brazing filler material melts, with a temperature history with general brazing heating, e.g., heating in brazing of heat exchangers for automobiles (requiring approximately 10 minutes or so to raise the temperature from 450°C to 577 °C), so that the effect of improving the joinability will be insufficient.

With the aluminum alloy clad material according to the present invention, a quality fillet can be formed without requiring etching of the material before the brazing, because no strong oxidized film is formed thereon during the production of the material, and reoxydation does not proceed very much during the brazing heating. It is also effective, however, to replace the oxidized film with a natural oxidized film by etching the material with acid solution or alkaline solution, when it is preferable to form a fillet reliably with a small amount of molten filler, for example.

The present invention is intended to provide a counterpart material (a material without any brazing filler material, and that is to be joined with molten filler) for achieving better brazability in flux-less brazing in which the material is brazed in an inert gas atmosphere with no application of a flux. By using the material according to the present invention, the positioning of a brazing filler material can be designed more freely, and brazing can be applied to a wider range of members having no brazing filler material. Furthermore, various problems related to flux-less brazing, such as unbalanced flow of molten filler, can be solved with the material according to the present invention, so that flux-less brazing can be applied to a wider range of heat exchangers having complex structures, advantageously.

### EXAMPLES

The advantageous effects achieved by the present invention will now be demonstrated by comparing some examples of the present invention against some comparative examples. These examples are, however, provided as some exemplary embodiment of the present invention, and the present invention is not limited these examples.

### Example 1, Comparative Example 1

Prepared for brazing tests and evaluations were two types of brazing sheets of which composition, thickness, and cladding ratio are indicated in Table 1. A brazing filler material and a core material are continuous-casted into separate ingots. The acquired ingot of the core material was then surface-machined to a size having a length of 163 mm and a width of 163 mm, and a thickness of 27 mm. The acquired ingot of the brazing filler material was hot-rolled to a thickness of 3 mm or a thickness of 1.5 mm, and cut to a size having a length of 163 mm and a width of 163 mm. The core material and the brazing filler material were then laminated, hot-rolled to a clad with a thickness of 3 mm, process-annealed once, cold-rolled into 0.4 mm, and applied with final annealing, to achieve an O-temper material.

**TABLE 1**

| # | Clad Structure | Composition (mass %) | | | | | | | | Sheet Thickness (mm) | Cladding Ratio (%) |
|---|---|---|---|---|---|---|---|---|---|---|---|
| | | Si | Fe | Cu | Mn | Mg | Cr | Zn | Bi | | |
| A | Brazing filler material | 10 | - | - | - | - | - | - | 0.05 | 0.4 | 10 |
| | Core material | - | - | - | 1.2 | 0.6 | - | - | - | | - |
| B | Brazing filler material | 10 | - | - | - | - | - | - | 0.05 | 0.4 | 5 |
| | Core material | - | - | - | 1.2 | 0.6 | - | - | - | | - |
| C | Brazing filler material | 10 | - | - | - | 0.6 | - | - | 0.05 | 0.4 | 10 |
| | Core material | - | - | - | 1.2 | - | - | - | - | | - |

Aluminum alloy clad materials (test materials P1 to P22) of which composition, thickness, and cladding ratio are indicated in Table 2 were prepared as materials according to the present invention, and aluminum alloy clad materials (test materials C1 to C18) of which composition, thickness, and cladding ratio are indicated in Table 3 were prepared as comparative materials. To produce these clad materials, a core material, an interlayer material, and a surface-layer material are continuous-casted into separate ingots. The acquired ingot of the core material was surface-machined to a size having a length of 163 mm and a width of 163 mm, and a thickness of 27 mm. The acquired ingot of the interlayer material was hot-rolled to a thickness of 3 mm, cold-rolled to 0.06 to 0.09 mm, and cut to a size having a length of 163 mm and a width of 163 mm. The acquired ingot of the surface-layer material was hot-rolled to a thickness of 3 mm, cold-rolled to 0.15 to 0.3 mm, and cut to a size having a length of 163 mm and a width of 163 mm. The core material and the surface-layer material, or the core material, the interlayer material, and the surface-layer material were then laminated, hot-rolled to a clad with a thickness of 3 mm, process-annealed once, cold-rolled to a predetermined thickness, and applied with final annealing, to achieve an O-temper material.

**TABLE 2**

| # | Clad Structure | Composition (mass %) | | | | | | | | | | | | Sheet Thickness (mm) | Cladding Ratio (%) |
|---|---|---|---|---|---|---|---|---|---|---|---|---|---|---|---|
| | | Si | Fe | Cu | Mn | Mg | Cr | Zn | Ti | Zr | Li | Be | Bi | | |
| P1 | Surface-layer material | - | - | - | - | 0.08 | - | - | - | - | - | - | - | 0.6 | 1 |
| | Core material | 0.15 | - | 0.06 | - | 0.2 | - | - | - | - | - | - | - | | - |
| P2 | Surface-layer material | - | - | - | - | 0.08 | - | - | - | - | - | - | - | 0.6 | 1 |
| | Core material | 0.15 | - | 0.06 | - | 2.0 | - | - | - | - | - | - | - | | - |
| P3 | Surface-layer material | - | - | - | - | 0.01 | - | - | - | - | - | - | - | 0.6 | 1 |
| | Core material | 0.35 | - | 0.25 | - | 0.6 | - | - | - | - | - | - | - | | - |
| P4 | Surface-laver material | - | - | - | - | 0.01 | - | - | - | - | - | - | - | 0.6 | 1 |
| | Core material | 0.35 | - | 0.25 | - | 0.6 | - | - | - | - | - | - | - | | - |
| | Surface-laver material | - | - | - | - | 0.01 | - | - | - | - | - | - | - | | 1 |
| P5 | Surface-layer material | - | - | - | - | 0.01 | - | - | - | - | - | - | - | 0.6 | 1 |
| | Interlayer Material | - | - | - | - | 0.3 | - | - | - | - | - | - | - | | 0.3 |
| | Core material | - | - | - | 1.2 | - | - | - | - | - | - | - | - | | - |
| P6 | Surface-layer material | - | - | - | - | 0.01 | - | - | - | - | - | - | - | 0.6 | 1 |
| | Interlayer Material | - | - | - | - | 2.0 | - | - | - | - | - | - | - | | 0.3 |
| | Core material | - | - | - | 1.2 | - | - | - | - | - | - | - | - | | - |
| P7 | Surface-layer material | - | - | - | - | 0.01 | - | - | - | - | - | - | 0.005 | 0.6 | 1 |
| | Interlayer Material | - | - | - | - | 0.6 | - | - | - | - | - | - | - | | 0.3 |
| | Core material | - | - | - | 1.2 | - | - | - | - | - | - | - | - | | - |
| P8 | Surface-layer material | - | - | - | - | 0.01 | - | - | - | - | - | - | - | 0.6 | 1 |
| | Interlayer Material | - | - | - | - | 0.6 | - | - | - | - | 0.01 | - | - | | 0.3 |
| | Core material | - | - | - | 1.2 | - | - | - | - | - | - | - | - | | - |
| P9 | Surface-laver material | - | - | - | - | 0.01 | - | - | - | - | - | - | - | 0.6 | 1 |
| | Interlayer Material | - | - | - | - | 0.6 | - | - | - | - | 0.05 | - | - | | 0.3 |
| | Core material | - | - | - | 1.2 | - | - | - | - | - | - | - | - | | - |
| P10 | Surface-layer material | - | - | - | - | 0.01 | - | - | - | - | - | - | - | 0.6 | 1 |
| | Interlayer Material | - | - | - | - | 0.6 | - | - | - | - | 0.2 | - | - | | 0.3 |
| | Core material | - | - | - | 1.2 | - | - | - | - | - | - | - | - | | - |
| P11 | Surface-layer material | - | - | - | - | 0.01 | - | - | - | - | - | - | - | 0.6 | 1 |
| | Interlayer Material | - | - | - | - | 0.6 | - | - | - | - | - | 0.01 | - | | 0.3 |
| | Core material | - | - | - | 1.2 | - | - | - | - | - | - | - | - | | - |
| P12 | Surface-layer material | - | - | - | - | 0.01 | - | - | - | - | - | - | - | 0.6 | 1 |
| | Interlayer Material | - | - | - | - | 0.6 | - | - | - | - | - | 0.07 | - | | 0.3 |
| | Core material | - | - | - | 1.2 | - | - | - | - | - | - | - | - | | |
| P13 | Surface-layer material | - | - | - | - | 0.01 | - | - | - | - | - | - | - | 0.6 | 1 |
| | Interlaver Material | - | - | - | - | 0.6 | - | - | - | - | - | 0.3 | - | | 0.3 |
| | Core material | - | - | - | 1.2 | - | - | - | - | - | - | - | - | | |
| P14 | Surface-layer material | - | - | - | - | 0.01 | - | - | - | - | - | - | - - | 0.6 | 1 |
| | Interlayer Material | - | - | - | - | 0.6 | - | - | - | - | 0.05 | 0.05 | - - | | 0.3 |
| | Core material | - | - | - | 1.2 | - | - | - | - | - | - | - | - | | - |
| P15 | Surface-layer material | 0.05 | - | - | - | 0.01 | - | 0.05 | - | - | - | - | - - | 0.6 | 1 |
| | Core material | - | - | - | 1.2 | 0.8 | - | - | - | - | - | - | | | |
| P16 | Surface-layer material | - | - | - | - | 0.01 | - | 4.0 | - | - | - | - | - | 0.6 | 1 |
| | Core material | - | - | - | 1.2 | 0.8 | - | - | - | - | - | - | - | | |
| P17 | Surface-layer material | 2.0 | - | - | - | 0.01 | - | - | - | - | - | - | - | 0.6 | 1 |
| | Core material | - | - | - | 1.2 | 0.8 | - | - | - | - | - | - | - | | - |
| P18 | Surface-laver material | - | - | - | - | 0.01 | - | - | - | - | - | - | - | 0.6 | 1 |
| | Core material | - | - | 0.05 | 1.2 | 0.8 | - | - | - | - | - | - | - | | |
| P19 | Surface-layer material | - | - | - | - | 0.01 | - | - | - | - | - | - | - | 0.6 | 1 |
| | Core material | - | - | 2.0 | 1.2 | 0.8 | - | - | - | - | - | - | - | | |
| P20 | Surface-layer material | - | - | - | - | 0.01 | - | 1.5 | - | - | - | - | - - | 0.6 | 1 |
| | Interlayer Material | - | - | 0.6 | - | - | - | - | - | - | - | - | - | | 0.3 |
| | Core material | - | - | - | 1.2 | 0.8 | - | - | - | - | - | - | - | | |
| P21 | Surface-layer material | - | - | - | - | 0.01 | - | - | - | - | - | - | - | 2.0 | 0.5 |
| | Core material | - | - | - | 1.2 | 1.2 | - | - | - | - | - | - | - | | - |
| P22 | Surface-laver material | - | - | - | - | 0.01 | - | - | - | - | - | - | - | 2.0 | 0.5 |
| | Interlayer Material | - | - | - | - | 2.0 | - | - | - | - | - | - | - | | 0.2 |
| | Core material | - | - | - | 1.2 | 1.2 | - | - | - | - | - | - | - | | |

**TABLE 3**

| No | Clad Structure | Composition (mass %) | | | | | | | | | | | | Sheet Thickness (mm) | Cladding Ratio (%) |
|---|---|---|---|---|---|---|---|---|---|---|---|---|---|---|---|
| | | Si | Fe | Cu | Mn | Mg | Cr | Zn | Ti | Zr | Li | Be | Bi | | |
| C1 | Single Plate | - | - | - | - | - | - | - | - | - | - | - | - | 0.6 | - |
| C2 | Single Plate | - | - | - | 1.2 | - | - | - | - | - | - | - | - | 0.6 | - |
| C3 | Single Plate | - | - | - | - | 0.2 | - | - | - | - | - | - | - | 0.6 | - |
| C4 | Single Plate | - | - | - | - | 0.6 | - | - | - | - | - | - | - | 0.6 | - |
| C5 | Single Plate | - | - | - | - | 1.2 | - | - | - | - | - | - | - | 0.6 | - |
| C6 | Surface-layer material | - | - | - | - | 0.12 | - | - | - | - | - | - | - | 0.6 | 1 |
| | Core material | 0.35 | - | 0.25 | - | 0.6 | - | - | - | - | - | - | - | | - |
| C7 | Surface-layer material | - | - | - | - | 0.01 | - | - | - | - | - | - | 0.015 | 0.6 | 1 |
| | Core material | 0.35 | - | 0.25 | - | 0.6 | - | - | - | - | - | - | - | | - |
| C8 | Surface-layer material | - | - | - | - | 0.01 | - | - | - | - | - | - | - | 0.6 | 1 |
| | Core material | 0.35 | - | 0.25 | - | 0.17 | - | - | - | - | - | - | - | | - |
| C9 | Surface-layer material | - | - | - | - | 0.01 | - | - | - | - | - | - | - | 0.6 | 1 |
| | Core material | 0.35 | - | 0.25 | - | 2.4 | - | - | - | - | - | - | - | | - |
| C10 | Surface-laver material | - | - | - | - | 0.01 | - | - | - | - | - | - | - | 0.6 | 1 |
| | Interlayer Material | - | - | - | - | 0.25 | - | - | - | - | - | - | - | | 0.3 |
| | Core material | - | - | - | 1.2 | - | - | - | - | - | - | - | - | | - |
| C11 | Surface-layer material | - | - | - | - | 0.01 | - | - | - | - | - | - | - | 0.6 | 1 |
| | Interlayer Material | - | - | - | - | 2.4 | - | - | - | - | - | - | - | | 0.3 |
| | Core material | - | - | - | 1.2 | - | - | - | - | - | - | - | - | | - |
| C12 | Surface-layer material | - | - | - | - | 0.01 | - | - | - | - | - | - | - | 0.6 | 1 |
| | Interlayer Material | - | - | - | - | 0.6 | - | - | - | - | 0.28 | - | - | | 0.3 |
| | Core material | - | - | - | 1.2 | - | - | - | - | - | - | - | - | | - |
| C13 | Surface-layer material | - | - | - | - | 0.01 | - | - | - | - | - | - | - | 0.6 | 1 |
| | Interlayer Material | - | - | - | - | 0.6 | - | - | - | - | - | 0.37 | - | | 0.3 |
| | Core material | - | - | - | 1.2 | - | - | - | - | - | - | - | - | | |
| C14 | Surface-layer material | - | - | - | - | 0.01 | - | 5 | - | - | - | - | - | 0.6 | 1 |
| | Interlayer Material | - | - | - | - | 0.6 | - | - | - | - | - | - | - | | 0.3 |
| | Core material | - | - | - | 1.2 | - | - | - | - | - | - | - | - | | - |
| C15 | Surface-layer material | 2.3 | - | - | - | 0.01 | - | - | - | - | - | - | - | 0.6 | 1 |
| | Interlayer Material | - | - | - | - | 0.6 | - | - | - | - | - | - | - | | 0.3 |
| | Core material | - | - | - | 1.2 | - | - | - | - | - | - | - | - | | - |
| C16 | Surface-layer material | - | - | - | - | 0.01 | - | - | - | - | - | - | - | 0.6 | 1 |
| | Core material | - | - | 2.5 | 1.2 | 0.6 | - | - | - | - | - | - | - | | - |
| C17 | Surface-layer material | - | - | - | - | 0.01 | - | - | - | - | - | - | - | 2.0 | 1 |
| | Core material | - | - | - | 1.2 | 0.8 | - | - | - | - | - | - | - | | - |
| C18 | Surface-layer material | - | - | - | - | 1.2 | - | - | - | - | - | - | - | 2.0 | 1 |
| | Interlayer Material | - | - | - | - | 0.8 | - | - | - | - | - | - | - | | 0.3 |
| | Core material | 0.35 | - | 0.25 | - | 0.6 | - | - | - | - | - | - | - | | 1 |

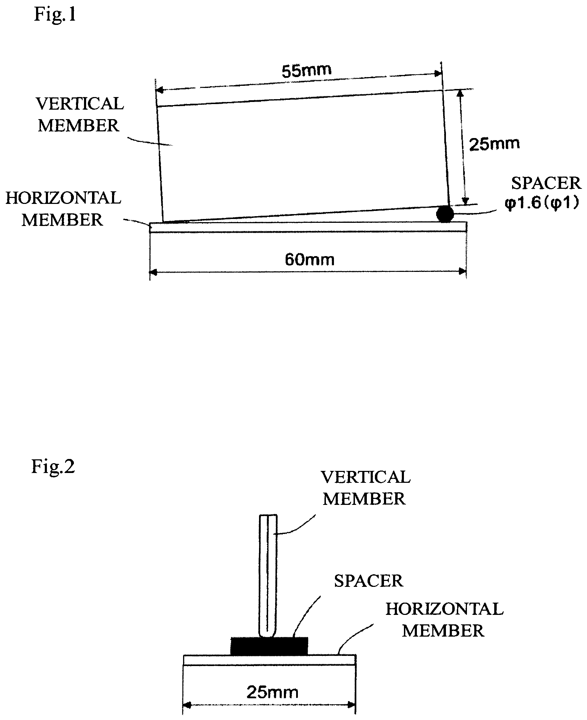

FIGS.1 to 2 illustrate the shape of a clearance filling test piece used in the braze fillet evaluation. The test piece includes a clad material (test material) according to the present invention as a horizontal member, a brazing sheet described above as a vertical member, and a spacer placed on one side of the joined portion between these two, and the length of the formed fillet was used in the evaluation of the joinability (clearance filling quality). This clearance filling test piece is different from a general counterpart in that the vertical member is made by adhesion-bending the brazing sheet, with the brazing filler material facing outside. By bending the vertical member in adhesion, a fillet formation will be more difficult, so the test piece can be evaluated under more strict conditions, compared with a general clearance filling test in which only a single plate is kept vertically. In this manner, it becomes possible to evaluate the joinability at a joint in the actual heat exchangers, where fillet formation is highly difficult.

Test materials were cut into predetermined sizes, and the brazing sheet for the vertical member was bent in adhesion. After degreasing the test material with acetone, the test materials were assembled to the test piece illustrated in FIGS. 1 to 2. A stainless-steel rod with a diameter of 1.6 mm was used as the spacer. A stainless-steel rod with a diameter of 1.0 mm was used as the spacer in the test pieces in which the brazing sheet B in Table 1, in which the thickness of the brazing filler material was half (0.02 mm), was used as the vertical member.

The assembled clearance filling test piece was brazed in a dual-chamber nitrogen gas atmosphere experiment brazing furnace with a pre-heating chamber and a brazing chamber. The flow rate of the nitrogen gas was adjusted so that two oxygen concentrations, 15 ppm and 30 ppm, in the atmosphere were achieved during the brazing. The heating speed was set to three levels, each requiring a period of 3 minutes (high-speed heating), 10 minutes (normal heating), or 20 minutes (low-speed heating), to raise the temperature from 450°C to 577 °C. Once the temperature of the test piece reaches 595 °C, the test piece was moved into the pre-heating chamber, and cooled immediately.

The length of the fillet formed on the brazed test piece (clearance filling length) was then measured, and the evenness of the formed fillet was visually evaluated.

The clearance filling length (with a value in the first decimal place rounded) was evaluated using the following four ranks.
⊙: ≥ 19 mm
⊙: 14 to 18 mm
Δ: 6 to 13 mm
×: ≤ 5 mm

The test pieces ranked to ○ or higher were classified as passed, and those ranked to Δ and × were classified as failed.

The fillet evenness was evaluated using the following four ranks.
⊙: the resultant fillet was completely even.
O: the resultant fillet was even in the lateral direction, although there were some uneven parts in the longitudinal direction.
Δ: the resultant fillet was uneven in the lateral direction.
×: the resultant fillet was extremely small, or no fillet was formed at all on one side of the lateral direction.

The test pieces ranked to ○ or higher were classified as passed, and those ranked to Δ and × were classified as failed.

The brazed test piece was then subjected to a copper accelerated acetic acid salt spray (CASS) test. In the test piece subjected to the corrosion test for 240 hours, the presence of preferential corrosion and intergranular corrosion in the fillet were then evaluated, through the observations of external appearance and cross-sections. The test pieces with no preferential corrosion or intergranular corrosion were ranked as ○ (none), and classified passed. The results of the clearance filling tests and the corrosion tests are indicated in Tables 4 and 5.

**TABLE 4**

| Piece # | Material | | Spacer Diameter (mm) | Etching | Heating Speed | Oxygen Concentration (ppm) | Clearance filling test results | | | Corrosion Test |
|---|---|---|---|---|---|---|---|---|---|---|
| | Part | Material # | | | | | Filled Length (mm) | Evaluation of Clearance filling Quality | Evaluation of Fillet Form | Preferential Corrosion or Intergranular Corrosion |
| 1 | Vertical Member | A | 1.6 | No | Normal | 15 | 15 | ○ | ○ | ○ (none) |
| | Horizontal Member | P1 | | | | | | | | |
| 2 | Vertical Member | A | 1.6 | No | Normal | 15 | 16 | ○ | ○ | ○ (none) |
| | Horizontal Member | P2 | | | | | | | | |
| 3 | Vertical Member | A | 1.6 | No | Normal | 30 | 15 | ○ | ○ | ○ (none) |
| | Horizontal Member | P3 | | | | | | | | |
| 4 | Vertical Member | A | 1.6 | No | Normal | 15 | 21 | ⊙ | ○ | ○ (none) |
| | Horizontal Member | P4 | | | | | | | | |
| 5 | Vertical Member | A | 1.6 | No | Normal | 30 | 16 | ○ | ○ | ○ (none) |
| | Horizontal Member | P4 | | | | | | | | |
| 6 | Vertical Member | A | 1.6 | No | Low | 15 | 16 | ○ | ○ | ○ (none) |
| | Horizontal Member | P5 | | | | | | | | |
| 7 | Vertical Member | A | 1.6 | No | Normal | 15 | 17 | ○ | ○ | ○ (none) |
| | Horizontal Member | P6 | | | | | | | | |
| 8 | Vertical Member | A | 1.6 | No | Normal | 15 | 17 | ○ | ○ | ○ (none) |
| | Horizontal Member | P7 | | | | | | | | |
| 9 | Vertical Member | A | 1.6 | No | Normal | 15 | 20 | ⊙ | ○ | ○ (none) |
| | Horizontal Member | P8 | | | | | | | | |
| 10 | Vertical Member | A | 1.6 | No | Normal | 15 | 22 | ⊙ | ⊙ | ○ (none) |
| | Horizontal Member | P9 | | | | | | | | |
| 11 | Vertical Member | A | 1.6 | No | High | 15 | 17 | ○ | ⊙ | ○ (none) |
| | Horizontal Member | P10 | | | | | | | | |
| 12 | Vertical Member | A | 1.6 | No | Normal | 15 | 16 | ○ | ○ | ○ (none) |
| | Horizontal Member | P11 | | | | | | | | |
| 13 | Vertical Member | A | 1.6 | No | Normal | 15 | 21 | ⊙ | ⊙ | ○ (none) |
| | Horizontal Member | P12 | | | | | | | | |
| 14 | Vertical Member | A | 1.6 | No | High | 15 | 16 | ○ | ⊙ | ○ (none) |
| | Horizontal Member | P13 | | | | | | | | |
| 15 | Vertical Member | A | 1.6 | No | Normal | 30 | 20 | ⊙ | ○ | ○ (none) |
| | Horizontal Member | P14 | | | | | | | | |
| 16 | Vertical Member | C | 1.6 | No | Normal | 15 | 15 | ○ | ○ | ○ (none) |
| | Horizontal Member | P14 | | | | | | | | |
| 17 | Vertical Member | A | 1.6 | No | High | 15 | 16 | ○ | ○ | ○ (none) |
| | Horizontal Member | P15 | | | | | | | | |
| 18 | Vertical Member | A | 1.6 | No | High | 15 | 17 | ○ | ⊙ | ○ (none) |
| | Horizontal Member | P16 | | | | | | | | |
| 19 | Vertical Member | A | 1.6 | No | High | 15 | 20 | ⊙ | ○ | ○ (none) |
| | Horizontal Member | P17 | | | | | | | | |
| 20 | Vertical Member | A | 1.6 | No | High | 15 | 15 | ○ | ○ | ○ (none) |
| | Horizontal Member | P18 | | | | | | | | |
| 21 | Vertical Member | A | 1.6 | No | High | 15 | 17 | ○ | ⊙ | ○ (none) |
| | Horizontal Member | P19 | | | | | | | | |
| 22 | Vertical Member | A | 1.6 | No | High | 15 | 22 | ⊙ | ⊙ | ○ (none) |
| | Horizontal Member | P20 | | | | | | | | |
| 23 | Vertical Member | A | 1.6 | No | Low | 30 | 15 | ○ | ○ | ○ (none) |
| | Horizontal Member | P21 | | | | | | | | |
| 24 | Vertical Member | A | 1.6 | No | Low | 15 | 16 | ○ | ⊙ | ○ (none) |
| | Horizontal Member | P22 | | | | | | | | |
| 25 | Vertical Member | B | 1.0 | Yes | Normal | 15 | 16 | ○ | ⊙ | ○ (none) |
| | Horizontal Member | P3 | | | | | | | | |

**TABLE 5**

| Piece # | Material | | Spacer Diameter (mm) | Etching | Heating Speed | Oxygen Concentration (ppm) | Clearance filling test results | | | Corrosion Test |
|---|---|---|---|---|---|---|---|---|---|---|
| | Part | Material # | | | | | Filled Length (mm) | Evaluation of Clearance filling Quality | Evaluation of Fillet Form | Preferential Corrosion or Intergranular Corrosion |
| 101 | Vertical Member | A | 1.6 | No | Normal | 15 | 10 | Δ | Δ | ○ (none) |
| | Horizontal Member | C1 | | | | | | | | |
| 102 | Vertical Member | A | 1.6 | No | Normal | 15 | 9 | Δ | Δ | ○ (none) |
| | Horizontal Member | C2 | | | | | | | | |
| 103 | Vertical Member | A | 1.6 | No | Normal | 15 | 11 | Δ | Δ | ○ (none) |
| | Horizontal Member | C3 | | | | | | | | |
| 104 | Vertical Member | A | 1.6 | No | Normal | 15 | 15 | ○ | Δ | ○ (none) |
| | Horizontal Member | C4 | | | | | | | | |
| 105 | Vertical Member | A | 1.6 | No | Normal | 15 | 10 | Δ | × | ○ (none) |
| | Horizontal Member | C5 | | | | | | | | |
| 106 | Vertical Member | A | 1.6 | No | Normal | 30 | 9 | Δ | Δ | ○ (none) |
| | Horizontal Member | C6 | | | | | | | | |
| 107 | Vertical Member | A | 1.6 | No | Normal | 15 | 8 | Δ | Δ | ○ (none) |
| | Horizontal Member | C7 | | | | | | | | |
| 108 | Vertical Member | A | 1.6 | No | Normal | 15 | 10 | Δ | Δ | ○ (none) |
| | Horizontal Member | C8 | | | | | | | | |
| 109 | Vertical Member | A | 1.6 | No | Normal | 15 | 11 | Δ | Δ | ○ (none) |
| | Horizontal Member | C9 | | | | | | | | |
| 110 | Vertical Member | A | 1.6 | No | Normal | 15 | 11 | Δ | Δ | ○ (none) |
| | Horizontal Member | C10 | | | | | | | | |
| 111 | Vertical Member | A | 1.6 | No | Normal | 15 | 16 | ○ | Δ | ○ (none) |
| | Horizontal Member | C11 | | | | | | | | |
| 112 | Vertical Member | A | 1.6 | No | Normal | 30 | 10 | Δ | Δ | ○ (none) |
| | Horizontal Member | C12 | | | | | | | | |
| 113 | Vertical Member | A | 1.6 | No | Normal | 30 | 9 | Δ | Δ | ○ (none) |
| | Horizontal Member | C13 | | | | | | | | |
| 114 | Vertical Member | A | 1.6 | No | High | 15 | 16 | ○ | ○ | × (preferential corrosion) |
| | Horizontal Member | C14 | | | | | | | | |
| 115 | Vertical Member | A | 1.6 | No | High | 15 | 17 | ○ | Δ | ○ (none) |
| | Horizontal Member | C15 | | | | | | | | |
| 116 | Vertical Member | A | 1.6 | No | High | 15 | 17 | ○ | ○ | × (intergranular corrosion) |
| | Horizontal Member | C16 | | | | | | | | |
| 117 | Vertical Member | A | 1.6 | No | Low | 15 | 9 | Δ | Δ | ○ (none) |
| | Horizontal Member | C17 | | | | | | | | |
| 118 | Vertical Member | A | 1.6 | No | Low | 15 | 8 | Δ | Δ | ○ (none) |
| | Horizontal Member | C18 | | | | | | | | |
| 119 | Vertical Member | C | 1.6 | No | Normal | 30 | ≤5 | × | × | - |
| | Horizontal Member | C4 | | | | | | | | |
| 120 | Vertical Member | B | 1.0 | No | Normal | 15 | 11 | Δ | ○ | ○ (none) |
| | Horizontal Member | P3 | | | | | | | | |

As indicated in Table 4, the test pieces including the test materials according to the present invention (P1 to 22) in the assembly exhibited acceptable clearance filling length and fillet shape (evenness), and neither preferential corrosion nor intergranular corrosion in the fillet were observed after the CASS test.

The test pieces 4, 9, 10, 13, 15, 19, and 22 resulted in clearance filling lengths of 19 mm or more, and exhibited particularly high joinability. Among these, the test piece 15 exhibited clearance filling length of 19 mm or more even in the oxygen concentration of 30ppm during the brazing, and the test pieces 19 and 22 exhibited a clearance filling length of 19 mm or more even with the high-speed heating. A completely even fillet was formed on the test pieces 10, 11, 13, 14, 18, 21, 22, 24, and 25. Among these, the resultant fillet was even on the test pieces 11, 14, 18, 21, and 22 even with the high-speed heating. In the test piece 24, although the surface-layer material of the test material (horizontal member) P22 was thick with a thickness of 100µm, an even fillet was formed with the low-speed heating. As to the test piece 25, although the thickness of the brazing filler material in the brazing sheet (vertical member) B was thin with a thickness of 0.02 mm, an even fillet was formed by applying etching before the brazing.

By contrast, the test pieces not satisfying the conditions according to the present invention failed the clearance filling test or the corrosion test, as indicated in Table 5. The test pieces 101 to 105 in which a single plate was used as a test material (horizontal member) were scored low in either or both of clearance filling quality and fillet evenness. In particular, the fillet evenness was prominently low in the test piece 105, which used the test material C5 with a greater Mg content as the horizontal member, because molten filler wetted and spread across the surface of the horizontal member excessively.

The test pieces 106 and 107 both exhibited inferior joinability, because the surface-layer material in the test material C6 used in the test piece 106 contained an excessive amount of Mg, and the surface-layer material in the test material C7 used in the test piece 107 contained an excessive amount of Bi. The test pieces 108 and 110 both exhibited inferior joinability because the core material in the test material C8 used in the test piece 108 contained a deficient amount of Mg, and the interlayer material in the test material C10 used in the test piece 110 contained a deficient amount of Mg. The test pieces 109, 111, and 115 all exhibited inferior joinability and resulted in erosion, because the core material in the test material C9 used in the test piece 109 contained an excessive amount of Mg; the interlayer material in the test material C11 used in the test piece 111 contained an excessive amount of Mg; and the surface-layer material in the test material C15 used in the test piece 11 contained an excessive amount of Si.

The test pieces 112 and 113 both exhibited inferior joinability, because the interlayer material in the test material C12 used in the test piece 112 contained an excessive amount of Li, and the interlayer material in the test material C13, which was used in the test piece 113 contained an excessive amount of Be. The test piece 114 exhibited acceptable joinability, but because an excessive amount of Zn was added to the surface-layer material of the test material C14, Zn dissolved into the molten filler, and preferential corrosion took place in the fillet during the CASS test. The test piece 116 exhibited acceptable joinability, but because an excessive amount of Cu was added to the core material of the test material C16, intergranular corrosion took place during the CASS test.

The test pieces 117 and 118 exhibited inferior joinability with the low-speed heating, because the test materials C17 and C18 both had a surface-layer material that was too thick. As to the test piece 119, because the test material (single plate) C4 and the brazing filler material of the brazing sheet making up the vertical member both contained Mg, and the test piece 119 was heated in a high-oxygen concentration brazing atmosphere, oxidation took place during the brazing heating, and resulted in extremely inferior joinability. Because the resultant fillet was extremely small and uneven, the test piece 119 was not subjected to the corrosion test. The test piece 120 exhibited an inferior clearance filling length, because the thickness of the brazing filler material in the brazing sheet B making up the vertical member was thin with a thickness of 0.02 mm, and because etching was not applied thereto before the brazing.

## Claims

1. An aluminum alloy clad material to be brazed in an inert gas atmosphere without application of a flux, comprising a core material that is made of an aluminum alloy containing Mg at a concentration of 0.2 to 2.0% (mass %; the same applies hereinafter), with the balance being Al and unavoidable impurities, and has one side or two sides cladded with a surface-layer material made of pure aluminum containing Mg having a limited concentration of lower than 0.1%.

2. An aluminum alloy clad material to be brazed in an inert gas atmosphere without application of a flux, comprising a core material that is made of an aluminum alloy containing Mg at a concentration of 0.2 to 2.0%, with the balance being Al and unavoidable impurities, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%.

3. An aluminum alloy clad material to be brazed in an inert gas atmosphere without application of a flux, comprising a core material that is made of an aluminum alloy containing Mg at a concentration of 0.2 to 2.0% and Mn at a concentration of 0.05 to 1.8%, with the balance being Al and unavoidable impurities, and has one side or two sides cladded with a surface-layer material made of pure aluminum containing Mg having a limited concentration of lower than 0.1%.

4. An aluminum alloy clad material to be brazed in an inert gas atmosphere without application of a flux, comprising a core material that is made of an aluminum alloy containing Mg at a concentration of 0.2 to 2.0% and Mn at a concentration of 0.05 to 1.8%, with the balance being Al and unavoidable impurities, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%.

5. The aluminum alloy clad material according to any one of claims 1 to 4, wherein the core material also contains either or both of Cu at a concentration of 0.05 to 2% and Si at a concentration of 0.05 to 1.0%.

6. An aluminum alloy clad material to be brazed in an inert gas atmosphere without application of a flux, comprising a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0%, with the balance being Al and unavoidable impurities.

7. An aluminum alloy clad material to be brazed in an inert gas atmosphere without application of a flux, comprising a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0%, with the balance being Al and unavoidable impurities.

8. An aluminum alloy clad material to be brazed in an inert gas atmosphere without application of a flux, comprising a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0% and also containing either or both of Li at a concentration of 0.01 to 0.2% and Be at a concentration of 0.01 to 0.3%, with the balance being Al and unavoidable impurities.

9. An aluminum alloy clad material to be brazed in an inert gas atmosphere without application of a flux, comprising a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and also containing either or both of Li at a concentration of 0.01 to 0.2% and Be at a concentration of 0.01 to 0.3%, with the balance being Al and unavoidable impurities.

10. An aluminum alloy clad material to be brazed in an inert gas atmosphere without application of a flux, comprising a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0% and Cu at a concentration of 0.05 to 2%, with the balance being Al and unavoidable impurities.

11. An aluminum alloy clad material to be brazed in an inert gas atmosphere without application of a flux, comprising a core material that is made of aluminum or an aluminum alloy, and has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and Cu at a concentration of 0.05 to 2%, with the balance being Al and unavoidable impurities.

12. An aluminum alloy clad material to be brazed in an inert gas atmosphere without application of a flux, comprising a core material that is made of aluminum or an aluminum alloy, and has one side or two sides cladded with a surface-layer material made of pure aluminum containing Mg having a limited concentration of lower than 0.1%, via an interlayer material made of an aluminum alloy containing Mg at a concentration of 0.3 to 2.0% and Cu at a concentration of 0.05 to 2% and also containing either or both of Li at a concentration of 0.01 to 0.2% and Be at a concentration of 0.01 to 0.3%, with the balance being Al and unavoidable impurities.

13. An aluminum alloy clad material to be brazed in an inert gas atmosphere without application of a flux, comprising a core material made of aluminum or an aluminum alloy has one side or two sides cladded with a surface-layer material made of an aluminum alloy containing either or both of Zn at a concentration of 0.05 to 4% and Si at a concentration of 0.05 to 2%, and Mg having a limited concentration of lower than 0.1%, via an interlayer material made of an aluminum alloy containing Mg at a concentration of 0.3 to 2.0% and Cu at a concentration of 0.05 to 2% and also containing either or both of Li at a concentration of 0.01 to 0.2% and Be at a concentration of 0.01 to 0.3%, with the balance being Al and unavoidable impurities.

14. The aluminum alloy clad material according to any one of claims 6 to 13, wherein the core material made of aluminum contains Mg at a concentration of 0.2 to 2.0%, with the balance being Al and unavoidable impurities.

15. The aluminum alloy clad material according to any one of claims 6 to 13, wherein the core material made of an aluminum alloy contains Mg at a concentration of 0.2 to 2.0% and Mn at a concentration of 0.05 to 1.8%, with the balance being Al and unavoidable impurities.

16. The aluminum alloy clad material according to claim 14 or 15, wherein the core material made of an aluminum alloy also contains Cu at a concentration of 0.05 to 2%.

17. The aluminum alloy clad material according to any one of claims 1 to 16, wherein a thickness of the surface-layer material is 0.1 mm or less.

18. A brazing method for brazing by assembling the aluminum alloy clad material according to any one of claims 1 to 17, wherein the aluminum alloy clad material is etched with an acid solution or an alkaline solution before the brazing.
